# EUROPÄISCHE PATENTANMELDUNG

(11) **EP 3 327 314 A1**
(43) Veröffentlichungstag der Anmeldung: **30.05.2018**
(21) Anmeldenummer: 17203015.7
(22) Anmeldetag: 22.11.2017
(51) Int. Cl.: F16H 57/04, F16H 3/091

(54) **SCHALTGETRIEBE MIT ÖLPUMPE**

(30) Priorität: 24.11.2016 DE 102016122706
(71) Anmelder: Getrag Ford Transmissions GmbH, 50735 Köln (DE)
(72) Erfinder: Hegerath, Andreas, 50126 Bergheim (DE)

(57) **Zusammenfassung**

Die Erfindung betrifft ein Schaltgetriebe für ein Kraftfahrzeug, umfassend
eine Kupplungsvorrichtung (10), die einen Kupplungseingang (16), welcher mit einem Motor des Kraftfahrzeugs drehfest verbindbar ist, einen ersten Kupplungsausgang (17) sowie eine erste Kupplung (13) aufweist, die in einem geschlossenen Zustand den Kupplungseingang (16) mit dem ersten Kupplungsausgang (17) verbindet,
eine erste Eingangswelle (20), die mit dem ersten Kupplungsausgang (17) drehfest verbunden ist,
eine weitere Getriebewelle (40) mit wenigstens einem darauf angeordneten Zahnrad, über das bei einem eingelegten Gang ein Drehmoment vom Motor übertragen wird,
eine Ölpumpe (50) mit einer Pumpenantriebswelle (52), die sich parallel in einem Abstand zu der ersten Eingangswelle (20) erstreckt und drehfest mit dem Kupplungseingang (16) verbunden ist.

Erfindungsgemäß ist vorgesehen, dass die Pumpenantriebswelle (52) koaxial zu der Getriebewelle (40) angeordnet ist.

## Beschreibung

Die Erfindung betrifft ein für ein Kraftfahrzeug einsetzbares Schaltgetriebe mit einer Kupplungsvorrichtung und einer Ölpumpe.

Aus der DE 10 2004 044 953 A1 ist ein solches Schaltgetriebe in Form eines Doppelkupplungsgetriebes bekannt, wobei die Kupplungsvorrichtung einen Kupplungseingang, der sich mit einem Motor des Kraftfahrzeugs drehfest verbinden lässt, einen ersten Kupplungsausgang sowie eine erste Kupplung aufweist, die in einem geschlossenen Zustand den Kupplungseingang mit dem ersten Kupplungsausgang verbindet. Des Weiteren weist die Kupplungsvorrichtung eine zweite Kupplung und einen zweiten Kupplungsausgang auf, wobei die zweite Kupplung dazu dient, den Kupplungseingang mit dem zweiten Kupplungsausgang zu verbinden.

Zudem weist das Doppelkupplungsgetriebe eine erste Eingangswelle, die mit dem ersten Kupplungsausgang drehfest verbunden ist, und eine zweite Eingangswelle auf, die mit dem zweiten Kupplungsausgang drehfest verbunden ist. Parallel zu den koaxial angeordneten Eingangswellen ist eine weitere Getriebewelle mit wenigstens einem darauf angeordneten Zahnrad vorgesehen, über das bei einem eingelegten Gang ein Drehmoment vom Motor zu einem Abtrieb übertragen wird. Die Ölpumpe weist eine Pumpenantriebswelle auf, die sich koaxial zu den Eingangswellen erstreckt und drehfest mit dem Kupplungseingang verbunden ist. Durch die drehfeste Verbindung mit dem Kupplungseingang ist sichergestellt, dass die Ölpumpe immer dann dreht, wenn sich der Motor dreht. Somit erzeugt die Ölpumpe ständig einen hydraulischen Druck unabhängig vom Schaltzustand des Schaltgetriebes. Die Ölpumpe ist bei dem Doppelkupplungsgetriebe der DE 10 2004 044 953 A1 an einem der Kupplungsvorrichtung abgewandten Ende der Eingangswellen angeordnet. Dies führt zu einer großen axialen Baulänge des Schaltgetriebes. Insbesondere bei einem Kraftfahrzeug mit Frontantrieb, bei dem der Motor und das Schaltgetriebe quer zur Fahrtrichtung eingebaut sind, ist die axiale Baulänge des Schaltgetriebes aber eine kritische Größe. Zudem benötigt die koaxiale Anordnung von drei Wellen, nämlich der Pumpenantriebswelle sowie der ersten Eingangswelle und der zweiten Eingangswelle, ein aufwändiges Lagerkonzept.

Aus der DE 10 2008 005 239 A1 ist ein Doppelkupplungsgetriebe mit einer Ölpumpe bekannt, deren Pumpenantriebswelle in einem Abstand parallel zu den koaxial angeordneten Eingangswellen verläuft. Die Ölpumpe befindet sich dabei in axialer Nähe zur Doppelkupplung. Durch die zu den Eingangswellen versetzte Anordnung lässt sich im Vergleich zur Anordnung der Ölpumpe gemäß der DE 10 2004 0 44953 A1 eine kleinere axiale Baulänge realisieren.

Der Bauraum ist bei einem Kraftfahrzeug mit quer eingebautem Motor und Getriebe dabei üblicherweise nicht nur in Axialrichtung stark eingeschränkt, sondern auch in radialer Richtung mit sehr spezifischen Packaging-Anforderungen verbunden. Die Anforderung an ein Kraftfahrzeug hinsichtlich Fahrkomfort und Effizienz steigen ständig, was zu automatisierten Getrieben mit einer größeren Anzahl von Gängen und damit zu mehr Platzbedarf für das Getriebe führt. Bei hydraulisch betätigten Schaltgetrieben ist ein immer zur Verfügung stehender Öldruck vorzuhalten. Die dafür notwendige Ölpumpe sollte daher entsprechend ausgelegt sein und möglichst so angeordnet sein, dass die Packaging-Anforderungen gut erfüllt werden können. Auch sollte der Aufbau des Getriebes und dessen Herstellung möglichst einfach sein, um die Herstellkosten niedrig zu halten. Somit ist die Konstruktion eines Getriebes eine komplexe Aufgabe, die von sehr unterschiedlichen und zum Teil gegensätzlichen Anforderungen gekennzeichnet ist.

Der Erfindung liegt daher die Aufgabe zu Grunde, ein Schaltgetriebe mit Kupplungsvorrichtung und Ölpumpe für ein Kraftfahrzeug, insbesondere für ein Kraftfahrzeug mit Front-Querantrieb, bereitzustellen, das die oben beschriebenen unterschiedlichen Anforderungen möglichst gut erfüllt.

Die der Erfindung zu Grunde liegende Aufgabe wird mit der Merkmalskombination gemäß Anspruch 1 gelöst. Ausführungsbeispiele der Erfindung können den Unteransprüchen zu Anspruch 1 entnommen werden.

Erfindungsgemäß ist vorgesehen, dass die Pumpenantriebswelle koaxial zu der Getriebewelle angeordnet ist. Die Ölpumpe kann dabei an einem der ersten Kupplung zugewandten Ende oder an einem der ersten Kupplung abgewandten Ende der Getriebewelle angeordnet sein. Die koaxiale Anordnung der Pumpenantriebswelle bzw. der Ölpumpe und der Getriebewelle, welche mit einem gewissen Achsabstand zur ersten Eingangswelle parallel verläuft, kann die Herstellung des Schaltgetriebes, insbesondere die mechanische Bearbeitung eines Getriebegehäuses des Schaltgetriebes, vereinfachen. So kann sich der Einsatz beispielsweise von Fräswerkzeugen für die Ausbildung von für die Ölpumpe und die Getriebewelle notwendigen Lageraugen etc. in einem Getriebegehäuse des Schaltgetriebes vereinfachen, da die Getriebewelle und die Pumpenantriebswelle koaxial verlaufen.

Durch die koaxiale Anordnung von Pumpenantriebswelle und Getriebewelle sind die Getriebewelle und die Ölpumpe in axialer Richtung hintereinander angeordnet. In einer Ausführung der Erfindung, in der eine axiale Länge der Getriebewelle und der Ölpumpe kleiner ist als eine axiale Länge der ersten Eingangswellen, hat dies folglich keinen Einfluss auf die axiale Gesamtbaulänge des Schaltgetriebes. Die koaxiale Anordnung von Getriebewelle und Ölpumpe sorgt in Umfangsrichtung gesehen, wobei hier die Achse der ersten Eingangswelle als Mittelachse des Schaltgetriebes zu Grunde gelegt wird, für einen kompakten Aufbau, da die Getriebewelle und die Ölpumpe nicht nebeneinander angeordnet werden müssen.

In dem Ausführungsbeispiel, in dem die Ölpumpe an einer der ersten Kupplung abgewandten Seite der Getriebewelle angeordnet ist, können die Getriebewelle als Hohlwelle und die Pumpenantriebswelle als zur Hohlwelle koaxialen Kernwelle ausgebildet sein sein. Dabei kann ein Antriebsrad, das auf der Pumpenantriebswelle sitzt, an einem ersten Ende der Hohlwelle und die Ölpumpe bzw. ein Pumpengehäuse an einem zweiten, dem ersten Ende gegenüberliegenden Ende der Hohlwelle angeordnet sein. Das Pumpengehäuse umschließt dabei die rotierenden Bauteile und die Ölkammern der Ölpumpe, durch die bzw. in denen der Öldruck aufgebaut wird. Das Pumpengehäuse ist vorzugsweise einstückig mit dem Getriebegehäuse oder mit einer Gehäusehälfte des Schaltgetriebes ausgebildet.

Bei dem Schaltgetriebe kann es sich um ein Doppelkupplungsgetriebe handeln, wobei die Kupplungsvorrichtung neben der ersten Kupplung eine zweite Kupplung und einen zweiten Kupplungsausgang aufweist. In diesem Ausführungsbeispiel ist zudem eine zweite Eingangswelle vorgesehen, die drehfest mit dem zweiten Kupplungsausgang verbunden ist. Vorzugsweise sind die erste Eingangswelle und die zweite Eingangswelle koaxial zueinander angeordnet. Die erste Eingangswelle kann dabei eine Kernwelle sein, die über eine gewisse axiale Teillänge von der als Hohlwelle ausgebildeten zweiten Eingangswelle umschlossen ist.

Vorzugsweise handelt es sich bei der ersten Kupplung oder bei den Kupplungen der Kupplungsvorrichtung um nasslaufende Kupplungen, die mit einem Kühlölstrom versorgt werden. Die Betätigung der Kupplungen und/oder das Einlegen der Gänge des Schaltgetriebes können über hydraulische Aktuatoren erfolgen, die über ein hydraulisches Steuerungssystem angesteuert werden. Das Steuerungssystem kann dabei auch die Menge des Kühlölstroms vorgeben.

Bei dem Doppelkupplungsgetriebe ist regelmäßig immer nur eine Kupplung geschlossen, sodass nur jeweils eine Eingangswelle über die Kupplungsvorrichtung mit dem Motor verbunden ist (die drehfeste Verbindung wird realisiert durch die drehfeste Verbindung zwischen Motor und Kupplungseingang, Kupplungseingang und Kupplungsausgang bei geschlossener Kupplung und zwischen Kupplungsausgang und Eingangswelle). Bei einem Schaltvorgang ohne Zugkraftunterbrechung können beide Kupplungen zeitgleich Drehmoment übertragen, wobei in dieser sogenannten Überschneidungsphase beide Kupplungen mit Schlupf betrieben werden.

Die koaxial zur Pumpenantriebswelle angeordnete Getriebewelle kann beispielsweise eine Ausgangswelle des Schaltgetriebes sein. Die Ausgangswelle kann dabei ein drehfest auf der Ausgangswelle sitzendes Ritzel aufweisen, das mit einem Ringrad kämmen kann. Das Ringrad kann mit einem Gehäuse eines Differenzials drehfest verbunden sein. Das Differenzial dient vorzugsweise dazu, das in das Ringrad eingeleitete Drehmoment auf ein linkes Vorderrad und ein rechtes Vorderrad zu verteilen. Somit wird das erfindungsgemäße Schaltgetriebe bevorzugt in einem Kraftfahrzeug mit Frontantrieb verwendet, in dem das Schaltgetriebe mit seinen parallelen Wellen und der Motor quer zur Fahrtrichtung eingebaut sind.

Neben der Eingangswelle oder den Eingangswellen, der möglicherweise als Ausgangswelle ausgebildeten Getriebewelle mit der koaxial dazu angeordneten Pumpenantriebswelle können weitere Wellen im Schaltgetriebe vorgesehen sein. Beispielsweise kann eine (zweite) Ausgangswelle mit einem (weiteren) Ritzel vorgesehen sein, das mit dem Ringrad kämmt. Die Drehachse des Ringrads erstreckt sich vorzugsweise parallel zu der Eingangswelle.

Die Getriebewelle kann auch als eine Brückenwelle ausgebildet sein, wobei bei eingelegtem Gang ein Drehmoment von der ersten Eingangswelle auf die zweite Eingangswelle übertragen wird. Der Weg des Drehmoments von der ersten Eingangswellen auf die zweite Eingangswelle bzw. von der zweiten Eingangswelle auf die erste Eingangswelle ist dabei vorzugsweise mit einer gewissen Übersetzung verbunden. Dadurch lässt sich die Anzahl von schaltbaren Gängen mit unterschiedlichen Übersetzungsverhältnissen im Schaltgetriebe erhöhen.

In einem Ausführungsbeispiel sind auf der Brückenwelle ein erstes Losrad, ein zweites Losrad und ein Festrad angeordnet, wobei das erste Losrad und das Festrad äußere Zahnräder auf der Brückenwelle darstellen. Eine Doppelgangschaltkupplung kann zwischen dem ersten Losrad und dem zweiten Losrad angeordnet sein. Vorzugsweise sind auf der Brückenwelle keine weiteren Zahnräder angeordnet. Dies bedeutet, dass, soweit eine jeweils endseitige Lagerung der Brückenwelle vorgesehen ist, zwischen den Lagern sich nur das erste Losrad, die Doppelgangschaltkupplung, das zweite Losrad und das Festrad befinden. Dies führt zu einer kleinen axialen Länge der Brückenwelle, so dass durch die Anordnung der Ölpumpe bzw. des Pumpengehäuses an einem der beiden Enden der Brückenwelle die axiale Gesamtbaulänge des Schaltgetriebes nicht vergrößert wird. Vorzugsweise ist das eine der Losräder auf der Brückenwelle einem Vorwärtsgang zugeordnet, während durch das andere Losrad ein Rückwärtsgang des Schaltgetriebes realisiert wird. Bei dem Vorwärtsgang kann es sich um einen ersten Vorwärtsgang handeln, also um den Vorwärtsgang mit dem größten Übersetzungsverhältnis.

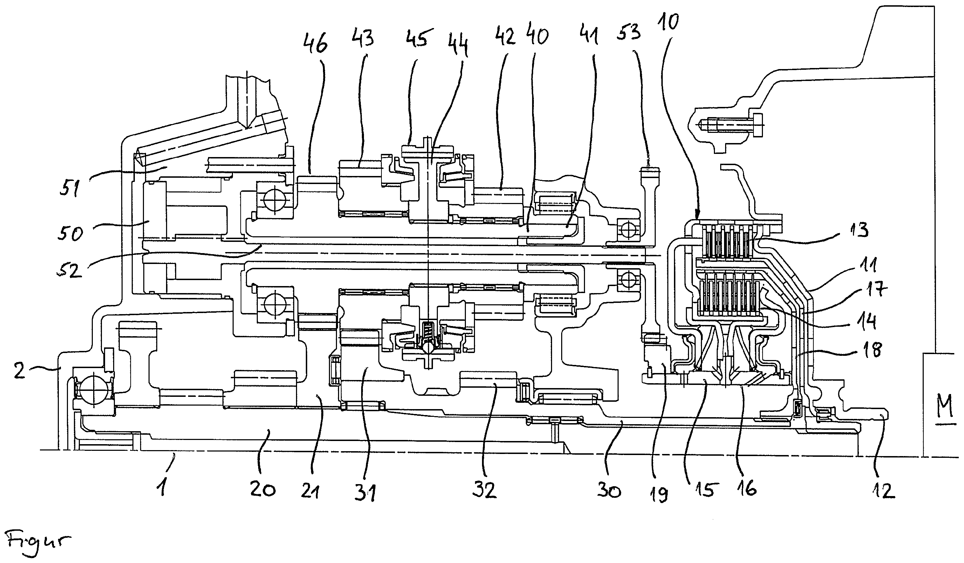

Anhand dem in der Zeichnung dargestellten Ausführungsbeispiel wird die Erfindung näher erläutert. Die einzige Figur zeigt einen Ausschnitt eines Radsatzes eines erfindungsgemäßen Schaltgetriebes.

Die Figur zeigt einen Ausschnitt eines als Doppelkupplungsgetriebe ausgebildeten Schaltgetriebes. Das Doppelkupplungsgetriebe weist eine Kupplungsvorrichtung 10 mit einem äußeren Kupplungstopf 11 auf, der sich über Verbindungsmittel 12 drehfest mit einem Motor M, beispielsweise mit einem Verbrennungsmotor eines Kraftfahrzeugs, verbinden lässt. Die Kupplungsvorrichtung 10 umfasst eine erste Kupplung 13 und eine zweite Kupplung 14. Eine Kupplungsnabe 15 und der damit drehfest verbundene äußeren Kupplungstopf 11 mit den Verbindungsmitteln 12 bilden einen Kupplungseingang 16 aus, der sich immer mit der Drehzahl des Verbrennungsmotors dreht.

Die erste Kupplung 13 ist über einen ersten Kupplungsausgang 17 mit einer ersten Eingangswelle 20 verbunden. Die erste Eingangswelle 20 ist als Kernwelle ausgebildet und erstreckt sich koaxial zu einer zweiten, als Hohlwelle ausgebildeten Eingangswelle 30. Die zweite Eingangswelle 30 ist mit einem zweiten Kupplungsausgang 18 drehfest verbunden. Die Eingangswellen 20, 30 drehen sich um eine Mittelachse 1 des Doppelkupplungsgetriebes. Auch die Kupplungen 13, 14 drehen sich um diese Mittelachse.

Wenn die erste Kupplung 13 geschlossen ist, besteht eine drehfeste Verbindung zwischen dem Motor M und der ersten Eingangswelle 20. Bei geschlossener zweiter Kupplung wird die zweite Eingangswelle 30 von dem Motor angetrieben.

Parallel beabstandet zu den Eingangswellen 20, 30 ist eine Getriebewelle 40 vorgesehen, die in dem hier gezeigten Ausführungsbeispiel als Brückenwelle 41 ausgebildet ist. Die Getriebewelle 40 bzw. die Brückenwelle 41 trägt ein erstes Losrad 42 und ein zweites Losrad 43, die sich über eine Doppelgangschaltkupplung 44 drehfest mit der Getriebewelle 40 verbinden lassen. In einer ersten Schaltstellung einer Schiebemuffe 45 der Doppelgangschaltkupplung 44 ist das erste Losrad 42 drehfest mit der Getriebewelle 40 verbunden. In einer zweiten Schaltstellung der Schiebemuffe 45, also von einer hier dargestellten Neutralstellung der Schiebemuffe 45 nach links verrückt, besteht eine drehfeste Verbindung zwischen der Getriebewelle 40 und dem zweiten Losrad 43. An einem der Kupplungsvorrichtung 10 abgewandten Ende der Getriebewelle 40 ist ein Festrad 46 vorgesehen. Über die Losräder 42, 43 und das Festrad 46 hinaus sind auf der Brückenwelle keine weiteren Zahnräder angeordnet.

Das zweite Losrad 43 kämmt mit einem Festrad 31 auf der zweiten Eingangswelle 30. Ist beispielsweise die erste Kupplung 13 geschlossen und befindet sich die Schiebemuffe 45 in der zweiten Schaltstellung, so treibt der Motor M über die erste Kupplung 13 die erste Eingangswelle 20 an. Über ein Festrad 21 auf der ersten Eingangswelle 20, welches mit dem Festrad 46 kämmt, wird die Getriebewelle 40 und somit auch das Losrad 43 angetrieben. Über den kämmenden Eingriff zwischen dem Losrad 43 und dem Festrad 31 wird die zweite Eingangswelle 30 angetrieben. Über hier nicht dargestellte weitere Zahnräder und einer hier nicht dargestellten Ausgangswelle des Doppelkupplungsgetriebes lässt sich dann das Drehmoment des Motors auf einen Abtrieb (nicht dargestellt) leiten. An dieser Stelle sei nochmals darauf hingewiesen, dass das Schaltgetriebe nur zum Teil dargestellt ist und auf die Darstellung weiterer Bauteile verzichtet wird.

In der Ebene des ersten Losrades 42 liegt ein drehfest auf der zweiten Eingangswelle 30 sitzendes Festrad 32, welches aber nicht mit dem Losrad 42 kämmt. Eine Verbindung zwischen dem Festrad 32 und dem zweiten Losrad 42 kann über ein Zwischenrad (nicht dargestellt) erfolgen, welches auf einer Zusatzwelle sitzt. Eine andere Möglichkeit der Verbindung von Festrad 32 und zweitem Losrad besteht in der Verwendung eines weiteren Losrads (nicht dargestellt), welches auf der zuvor angesprochenen Ausgangswelle angeordnet sein kann. Bedingt durch das Zwischenrad oder das Losrad zwischen dem Festrad 32 und dem ersten Losrad 42 kommt es in dem Doppelkupplungsgetriebe zu einer Drehrichtungsumkehr, so dass das erste Losrad 42 einem Rückwärtsgang des Doppelkupplungsgetriebes zugeordnet werden kann. Das zweite Losrad 43 ist vorzugsweise einem ersten Vorwärtsgang zugeordnet, mit dem sich im Doppelkupplungsgetriebe das größte Übersetzungsverhältnis in Vorwärtsrichtung realisieren lässt.

An dem der Kupplungsvorrichtung 10 abgewandten Ende der Getriebewelle 40 ist ein Pumpengehäuse 51 einer Ölpumpe 50 vorgesehen. Das Pumpengehäuse 51 bzw.

Teile davon können einstückig mit einer Gehäusehälfte 2 des Schaltgetriebes ausgebildet sein.

Die Ölpumpe 50 weist eine Pumpenantriebswelle 52 auf, die koaxial zur Getriebewelle 40 verläuft. Die Pumpenantriebswelle 52 ist dabei als Kernwelle ausgebildet, während die Getriebewelle 40 als Hohlwelle ausgebildet ist. An einem dem Pumpengehäuse 51 abgewandten Ende der Pumpenantriebswelle 52 ist ein als Zahnrad ausgebildetes Antriebsrad 53 angeordnet, das im kämmenden Eingriff steht mit einem Festrad 19 auf der Kupplungsnabe 15. Dies bedeutet, dass sich die Ölpumpe 50 immer dann dreht, wenn der Motor läuft. Beispielsweise kann somit die Ölpumpe 50 auch dann Öldruck erzeugen, wenn die zur Pumpenantriebswelle 52 koaxial angeordnete Getriebewelle 50 still steht. Insgesamt ist durch die drehfeste Verbindung des Antriebszahnrads 53 mit dem Kupplungseingang 16 ein Antrieb der Ölpumpe 50 in jedem Schalt- oder Betriebszustand des Doppelkupplungsgetriebes garantiert. Durch den Öldruck der Ölpumpe 50 lassen sich die Kupplungen 13, 14 hydraulisch betätigen. Auch das Einlegen von Gängen des Doppelkupplungsgetriebes erfolgt vorzugsweise hydraulisch. Zwischen dem Antriebsrad 53 und dem Festrad 19 können Zugmittel wie eine Kette oder ein Riemen vorgesehen sein.

Wie der Figur des Weiteren zu entnehmen ist, ist die axiale Erstreckung des Verbunds bestehend aus Getriebewelle 40 und Ölpumpe 50 mit Pumpengehäuse 51, Pumpenantriebswelle 52 und dem Antriebsrad 53 kleiner als die axiale Länge der ersten Eingangswellen 20. Somit hat, in axialer Richtung von der Motorseite aus gesehen, die hinter der Getriebewelle 40 angeordnete Ölpumpe 50 (genauer gesagt das Pumpengehäuses 51, welches die für den Öldruck notwendigen rotierenden Bauteile und Ölkammern der Ölpumpe 50 umschließt) keinen Einfluss auf die maximale axiale Baulänge des Doppelkupplungsgetriebes.

Insbesondere bei der Ausführung, bei der der Rückwärtsgang des Doppelkupplungsgetriebes über ein Zwischenrad auf einer Zusatzwelle realisiert wird, lässt sich die Position des Verbunds von Getriebewelle 40 und Ölpumpe 50 flexibel in Umfangsrichtung (bezogen auf die Mittelachse 1 des Doppelkupplungsgetriebes) anordnen. Dadurch lässt sich ein kurz bauendes Doppelkupplungsgetriebe realisieren, das auch besondere Packaging-Anforderungen in radialer Richtung erfüllt.

### Bezugszeichenliste

- 1: Mittelachse
- 2: Gehäusehälfte

- 10: Kupplungsvorrichtung
- 11: Kupplungstopf
- 12: Verbindungsmittel
- 13: Verbindungsmittel
- 14: zweite Kupplung
- 15: Kupplungsnabe
- 16: Kupplungseingang
- 17: erster Kupplungsausgang
- 18: zweiter Kupplungsausgang
- 19: Zahnrad

- 20: erste Eingangswelle
- 21: Festrad

- 30: zweite Eingangswelle
- 31: Festrad
- 32: Festrad

- 40: Getriebewelle
- 41: Brückenwelle
- 42: erstes Losrad
- 43: zweites Losrad
- 44: Doppelgangschaltkupplung
- 45: Schiebemuffe
- 46: Festrad
- 50: Ölpumpe
- 51: Pumpengehäuse
- 52: Pumpenantriebswelle
- 53: Antriebsrad

## Patentansprüche

1. Schaltgetriebe für ein Kraftfahrzeug, umfassend
eine Kupplungsvorrichtung (10), die einen Kupplungseingang (16), welcher mit einem Motor des Kraftfahrzeugs drehfest verbindbar ist, einen ersten Kupplungsausgang (17) sowie eine erste Kupplung (13) aufweist, die in einem geschlossenen Zustand den Kupplungseingang (16) mit dem ersten Kupplungsausgang (17) verbindet,
eine erste Eingangswelle (20), die mit dem ersten Kupplungsausgang (17) drehfest verbunden ist,
eine weitere Getriebewelle (40) mit wenigstens einem darauf angeordneten Zahnrad, über das bei einem eingelegten Gang ein Drehmoment vom Motor übertragen wird,
eine Ölpumpe (50) mit einer Pumpenantriebswelle (52), die sich parallel in einem Abstand zu der ersten Eingangswelle (20) erstreckt und drehfest mit dem Kupplungseingang (16) verbunden ist,
**dadurch gekennzeichnet, dass** die Pumpenantriebswelle (52) koaxial zu der Getriebewelle (40) angeordnet ist.

2. Schaltgetriebe nach Anspruch 1, **dadurch gekennzeichnet, dass** eine axiale Länge der Getriebewelle (40) und der Ölpumpe (50) kleiner ist als eine axiale Länge der ersten Eingangswelle (20).

3. Schaltgetriebe nach Anspruch 1 oder 2, **dadurch gekennzeichnet, dass** die Ölpumpe (50) an einem der ersten Kupplung (13) abgewandten Ende der Getriebewelle (40) angeordnet ist.

4. Schaltgetriebe nach Anspruch 1 oder 2, **dadurch gekennzeichnet, dass** die Getriebewelle (40) als Hohlwelle und die Pumpenantriebswelle (52) als zur Hohlwelle koaxiale Kernwelle ausgebildet sind, wobei ein Antriebsrad (53), das auf der Pumpenantriebswelle (52) sitzt, an einem ersten Ende der Hohlwelle und ein Pumpengehäuse (51) an einem zweiten Ende der Hohlwelle angeordnet sind.

5. Schaltgetriebe nach einem der Ansprüche 1 bis 4, **dadurch gekennzeichnet, dass** die Kupplungsvorrichtung (10) eine zweite Kupplung (14) und einen zweiten Kupplungsausgang (18) aufweisen, der mit einer zweiten Eingangswelle (30) drehfest verbunden ist.

6. Schaltgetriebe nach einem der Ansprüche 1 bis 5, **dadurch gekennzeichnet, dass** die Getriebewelle (40) als eine Ausgangswelle mit einem Ritzel ausgebildet ist, das mit einem Ringrad kämmt.

7. Schaltgetriebe nach Anspruch 6, **dadurch gekennzeichnet, dass** das Ringrad mit einem Gehäuse eines Differenzials drehfest verbunden ist.

8. Schaltgetriebe nach Anspruch 5, **dadurch gekennzeichnet, dass** die Getriebewelle (40) als eine Brückenwelle (41) ausgebildet ist, wobei bei eingelegtem Gang ein Drehmoment von der ersten Eingangswelle (20) auf die zweite Eingangswelle (30) übertragen wird.

9. Schaltgetriebe nach Anspruch 8, **dadurch gekennzeichnet, dass** auf der Brückenwelle (41) ein erstes Losrad (42), eine Doppelgangschaltkupplung (44), ein zweites Losrad (43) und ein Festrad (46) angeordnet sind, wobei das erste Losrad (42) und das Festrad (46) äußere Zahnräder auf der Brückenwelle (41) darstellen.
